# EUROPEAN PATENT APPLICATION

(11) **EP 1 881 306 A1**
(43) Date of publication of application: **23.01.2008**
(21) Application number: 07111833.5
(22) Date of filing: 05.07.2007
(51) Int. Cl.: G01F 23/00, G01F 23/26

(54) **A remote data concentrator utilized in an aircraft**

(30) Priority: 21.07.2006 US 832480 P
(71) Applicant: The Boeing Company, Chicago, IL 60606-1596 (US)
(72) Inventor: Keyes, Joseph E., Everett, WA 98203 (US); Cannon, Ed, Kechi, KS 67067 (US); Okokhere, Paul A., Wichita, KS 67226 (US)
(74) Representative: Korenberg, Alexander Tal

(57) **Abstract**

A remote data concentrator for use in a vehicle is disclosed. The remote data concentrator comprises a circuitry for limiting the amount of energy delivered to a fuel tank of the vehicle to intrinsically safe levels when the remote data concentrator is coupled thereto.

## Description

### FIELD OF THE INVENTION

The present embodiment relates generally to commercial aircraft and more particularly to a remote data concentrator for use with the aircraft.

### BACKGROUND OF THE INVENTION

Recent federal aviation regulations require that new transport aircraft include systems that provide for safe fuel tank separation from other components of the aircraft. Safe fuel tank system operation from an electrical perspective is based on maintaining electrical energy and current at intrinsically safe levels within the fuel tank at all times.

A flammable fuel mixture may occur as a function of ullage and environmental factors such as temperature and altitude. For fuel tank safety of design, it is assumed that the tanks are always flammable. For example, some of the ignition sources to be avoided are arcing and thermal hot spots on the fuel tank wall of sufficient size and heat energy that may result in an ignition within the fuel tank.

Conventional approaches do not completely resolve the issue of separation of fuel tank and possible ignition sources from other systems within an airplane, and they also do not minimize threats from lightning and high intensity radiated fields.

What is needed is a method and system to prevent energy from unknown sources from getting into the fuel tanks of a vehicle via the fuel quantity indicating system, thereby preventing an ignition source during all phases of operation of a vehicle such as an aircraft.

### SUMMARY OF THE INVENTION

A remote data concentrator for use in a vehicle is disclosed. The remote data concentrator comprises a circuitry for limiting the amount of energy delivered to a fuel tank of the vehicle to intrinsically safe levels when the remote data concentrator is coupled thereto.

### BRIEF DESCRIPTION OF THE DRAWINGS

FIG. 1 is a partially schematic isometric view of an aircraft having a fuel quantity indicating system operably coupled to a fuel tank.
FIG. 2 is a supply block diagram of a fuel quantity indicating system in accordance with the present embodiment.
FIG. 3 shows one embodiment of an installed protected side harness.
FIG. 4 is a cross-sectional view of protected side harness cabling.
FIG. 5 is a plan view of a typical protected side harness assembly.
FIG. 6 is a perspective view of a remote data concentrator.
FIG. 7 is a block diagram of an embodiment of a remote data concentrator.
FIG. 8 is a block diagram of a fuel quantity processor unit.

### DETAILED DESCRIPTION

The following description is presented to enable one of ordinary skill in the art to make and use the embodiment and is provided in the context of a patent application and its requirements. Various modifications to the embodiments and the generic principles and features described herein will be readily apparent to those skilled in the art. Thus, the present embodiment is not intended to be limited to the embodiments shown, but is to be accorded the widest scope consistent with the principles and features described herein.

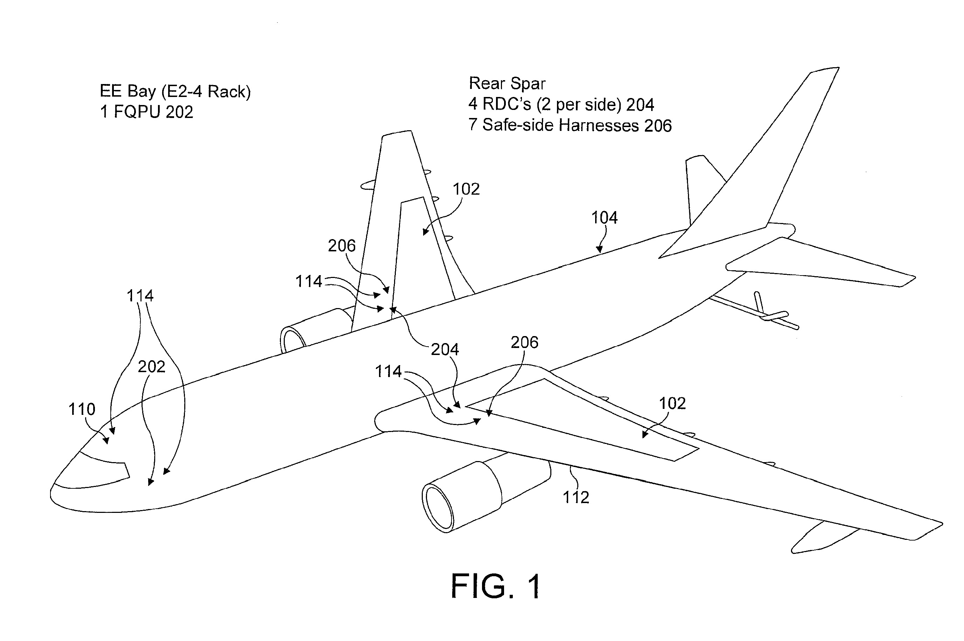

FIG. 1 is a partially schematic isometric view of an aircraft having a fuel quantity indicating system 114 operably coupled to a fuel tank 102. In one aspect of this embodiment, the fuel tank 102 is a center-wing tank positioned at least partially in a fuselage 104 of the aircraft 100 adjacent to a wing 106. In other embodiments, the fuel quantity indicating system 114 may be operably coupled to one or more other fuel tanks in the aircraft 100, such as additional fuel tanks positioned in the wing 106 and/or the fuselage 104.

### Overview

The primary function of the fuel quantity indicating system 114 is to measure fuel quantity on the ground and in the air. A fuel quantity indicating system 114 in accordance with the present embodiment may meet three requirements:
(1) Digitally select the amount of fuel to be loaded onto the plane from the flight deck in flight or on the ground.
(2) Determine fuel quantity in auxiliary tanks.
(3) Eliminate a significant amount of the low capacitance probe wiring.

The fuel quantity indicating system may also protect against high intensity radiated fields (HIRF), electromagnetic interference and lightning using the following features:
1. Protected side harnesses. Harnesses may be constructed with jacketed, double shielded, twisted wires. Shields RF may be bonded at both ends to primary structure.
2. Remote data concentrator. RF bonded to a bulkhead of the aircraft via, Fay surface, strap, and pin chassis grounding.
3. Fuel quantity processor unit to remote data concentrator interconnecting harness. These harnesses may connect a fuel quantity processor unit to the remote data concentrators are shielded twisted pair. The shields may be RF bonded at both ends.
4. Fuel quantity processor unit. The fuel quantity processor unit may be RF bonded to the equipment rack which is bonded to the primary structure.

In one environment, probe wiring may be routed from the leading edge of the wing to a compartment where a quantity indicating processor determines the fuel quantity. The system also may include a remote data concentrator which will be described in detail hereinafter, which has built-in transient protection. The remote data concentrator may prevent energy from entering the tank and transmits a digital fuel quantity data for each tank to a processor unit. To describe the features of the fuel indicating system 114 in detail refer now to the following description in conjunction with the accompany figures.

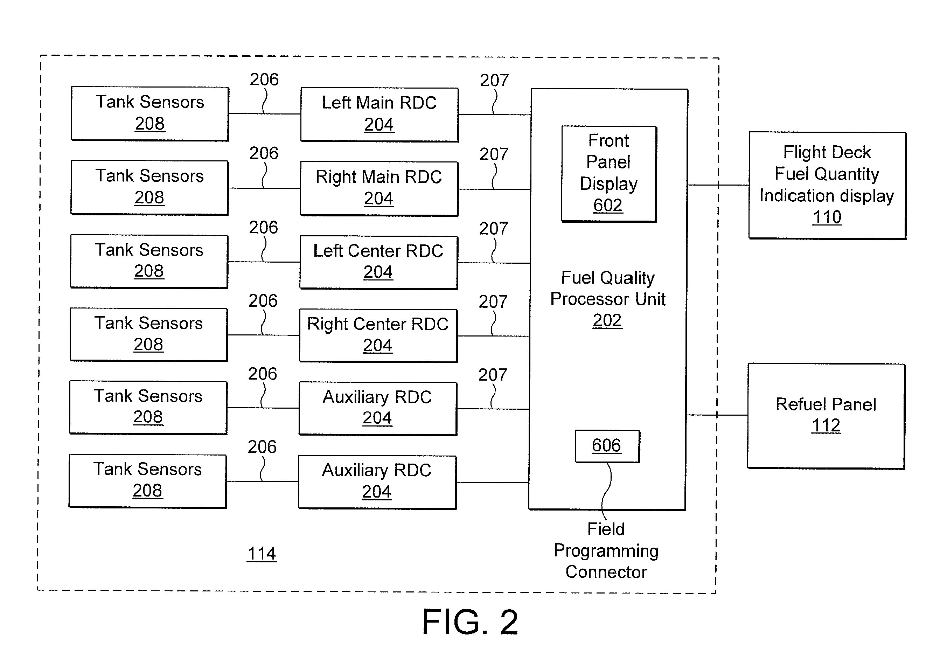

FIG. 2 is a simple block diagram of a fuel quantity indicating system 114 in accordance with the present embodiment. The major components may be a fuel quantity processor unit 202 which is coupled to a plurality of remote data concentrators 204 via a plurality of unprotected side harnesses 207 and protected side harnesses 206. The protected side harnesses 206 may be coupled to a plurality of tank sensors 208; i.e., compensators, densitometers, and fuel height sensors. In one embodiment, the compensators, capacitive probes, and densitometers may be connected to a plurality of spar connectors that penetrate the inside of the fuel tank to provide electrical connection to sensors. The plurality of spar connectors may be connected to the remote data concentrator's connectors via the protected harnesses 206. The fuel quantity processor unit may be coupled to other components of the airplane, such as the flight deck indicator 110 and refuel panel 112.

### In-Tank Components

The in-tank harnesses may connect the capacitive probes, compensators, and densitometers to through tank spar connectors. The in-tank components may be connected to the remote data concentrators 204 via double shielded and jacketed protected side harnesses 206. To describe the unprotected side harnesses 207 and protected side harnesses 206 in more detail, refer now to the following description in conjunction with the accompanying Figures.

### Unprotected Side Harnesses 207

The unprotected side harnesses may connect the fuel quantity processor unit 202 to respective remote data concentrators 204 and may be routed through the aircraft. The harnesses 207, for example, may be routed from an equipment rack in the fuselage and out through a wing pressure seal to the remote data concentrator 204. The harnesses 207 may supply power to the remote data concentrators 204 and provide the electrical path between the remote data concentrators 204 and fuel quantity processor unit 202 for transmission of data. The harnesses may be a shielded twisted pair such as of the N category type. This allows for the FQPU 202 to be installed in any location in the vehicle.

### Protected Side Harnesses 206

The protected side harnesses may connect the RDC 204 to the tank sensors 208 via a spar connector (not shown). The protected side harnesses may be category F, highly rugged harness. The protected side harnesses may be as short as practically possible. The protected side harnesses may conduct intrinsically safe signals to and from the remote data concentrators and in-tank components. In one embodiment, the outer most harness jacket color may be required to be a particular color such as pink, and the harnesses may be required to be installed with a positive spatial separation from other wiring within the aircraft. Accordingly, an outer jacket of a particular color may satisfy "the visible means to identify critical features" requirement.

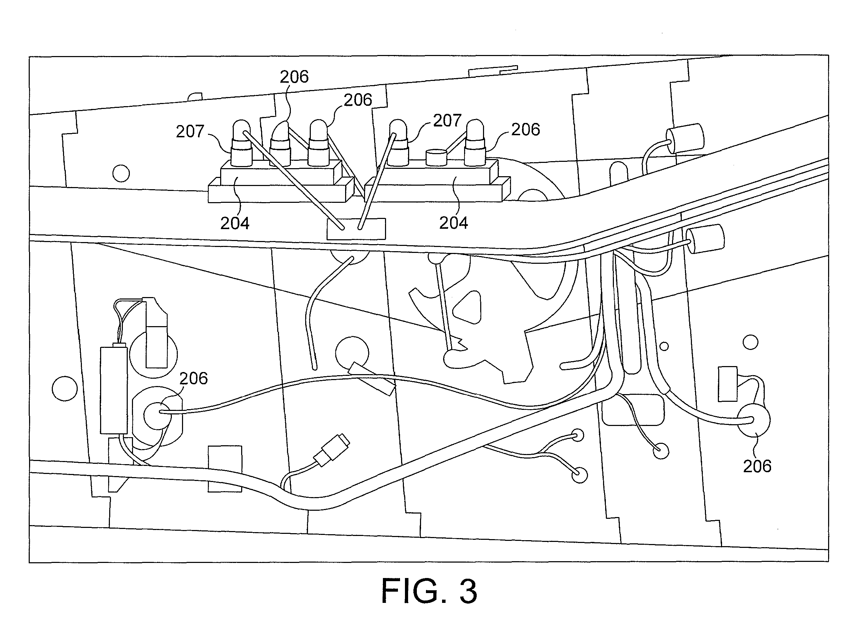

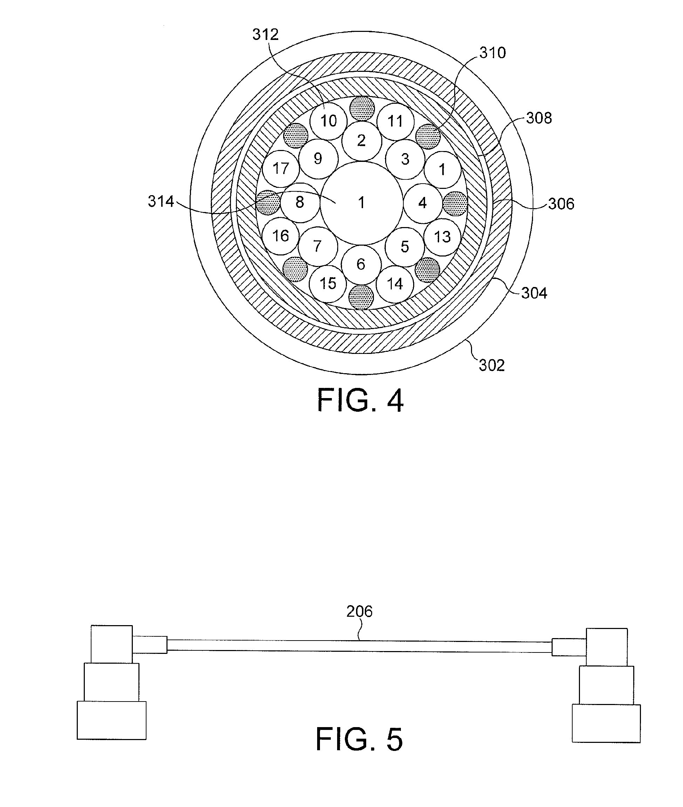

FIG. 3 shows one embodiment of an installed protected side harness 206. As is seen, the protected side harnesses 206 has been designed to be as short as practically possible and may be coupled to a plurality of remote data concentrators 204. FIG. 4 is a cross-sectional view of protected side harness 206 cabling. The cabling 300 may include an outer jacket 302, an outer shield 304, an inner jacket 306, an inner shield 308, PTFE filler 310, M22759/80-20 312 wire, and shielded and jacketed wire 314. Although one embodiment of the herein protected side harness cabling is shown in FIG. 4, one of ordinary skill in the art can see that additional wires, filler material, shielding and related elements could be included within the cabling. FIG. 5 is a plan view of a typical protected side harness assembly 206.

### Protected Side Harnesses Installation

### The protected side harness assembly 206 may be installed as follows:

Clamps may be utilized such that a failure of one clamp will maintain a predetermined separation from all surrounding surfaces and equipment. Where the predetermined separation (for example, 2 inches) can not be achieved, then the harnesses may be routed with a non-conductive and/or electrically grounded barrier. The harness shields may be terminated to primary structure with an RF bond. As before mentioned, the protected side harnesses may be coupled to a plurality of remote data concentrators 204. The features of the remote data concentrators 204 are described in detail hereinbelow.

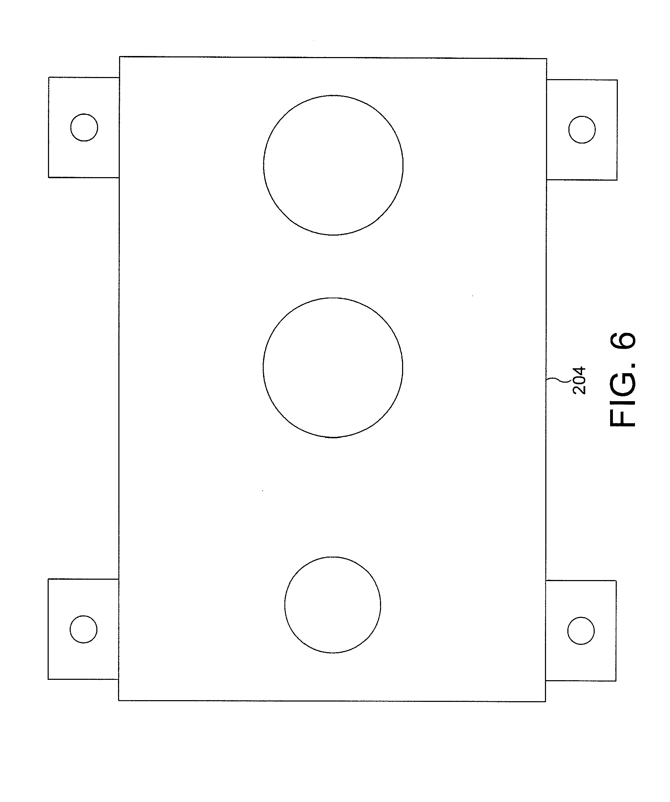

FIG. 6 is a perspective view of a remote data concentrator 204. The remote data concentrator 204 may be a pin programmable circuit. Its purpose is to prevent unsafe energy levels from entering a fuel tank. Each of the remote data concentrators 204 may be mounted in a very severe environment (for example, the wheel well region of the aircraft) and may be exposed to extreme temperature, pressure variations, and damaging fluids. To describe the features of the remote data concentrator in more detail, refer now to the following description in conjunction with the accompanying Figures.

### RDC Protection from Damaging Fluids

The remote data concentrator 204 may be hermetically sealed and the circuit card assembly in the remote data concentrator may be coated with a protectant for an added layer of protection in the event that the hermetic seal fails

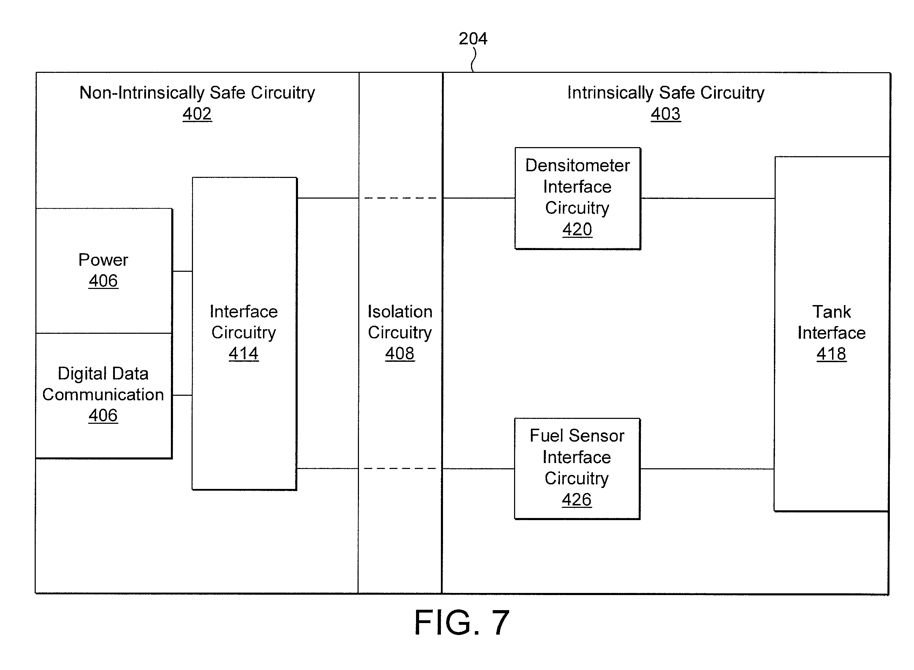

FIG. 7 is a block diagram of the circuitry of an embodiment of a remote data concentrator 204. The remote data concentrator 204 may be coupled to both the in-tank components and to the fuel quantity processor unit 202. The remote data concentrator 204 may provide the tank interface, densitometer and fuel sensor interface circuitry, isolation circuitry, power, and digital data communication interfaces. A key element of the remote data concentrator 204 is that there are three circuitry sections, a non-intrinsically safe circuitry section 402 which may be coupled to the fuel quantity indicating system processor and an intrinsically safe circuitry section 404 which may be coupled to the protected side harnesses 206. The intrinsically safe and non-intrinsically safe circuits may be separated from each other via isolation circuitry 408.

The non-intrinsically safe circuitry 402 may include a power and digital data communications interface 406 which may provide input to interface circuitry 414 which may be in communication with the power and digital data communication interface 406 and with the isolation circuitry 408.

The intrinsically safe circuitry 403 includes a tank interface 418 which may be coupled to a plurality of interfaces. The circuit 403 is intrinsically safe via a combination of (1) isolation; and (2) separation and shielding of the circuit board and interconnect wiring. In this case the interfaces are the densitometer interface 420 and fuel sensor circuitry 426. The tank interface 418 may be also in communication with a fuel sensor circuit 426. The interfaces 420 and 426 may be in communication with isolation element 408. The densitometer interface 420 and fuel sensor circuitry 426, may receive signals from the isolation element 408 from the non-intrinsically safe circuitry and may provide signals to the tank interface 418.

The in-tank fuel quantity indicating system components may be electrically isolated from the aircraft wiring by the remote data concentrator via a combination of (1) isolation; and (2) separation and shielding of the circuit board and interconnect wiring.

These features allow the remote data concentrator to limit the amount of energy entering the fuel tank via the protected side harnesses to a level considered to be intrinsically safe with failure probability of less than extremely improbable.

### Remote Data Concentrator Software

The remote data concentrator may include three (3) different software programs. The signal processing program (SPP), the densitometer processing program (DPP), and the boot loader program (BLP).

The signal processing program and boot loader program may be executed, for example, by a TMS320C32 digital signal processor operating at 40 MHz. The densitometer processing program may be executed on a micro-controller operating at 20 MHz. Each of these programs and their function will be described in more detail hereinbelow.

### Signal Processing Program (SPP)

The signal processing program may control the remote data concentrator on-board heaters. Additionally, the signal processing program may initiate the remote data concentrator self test when the fuel quantity processor unit self test command is received. The signal processing program may report the built-in test results of the tank units, compensator and hi-Z signal conditioning circuitry, and the sensor and interface wiring to the fuel quantity processor unit. The signal processing program may be responsible for reporting the following information to the fuel quantity processor unit (a) tank unit and compensator sensor capacitance; (b) capacitive tank units measure the height of fuel in the tank; (c) capacitive compensator measures the dielectric constant of the fuel; (d) tank unit and compensator sensor resistance; (e) Hi-Z cable capacitance; (f) Hi-Z cable resistance; (g) densitometer processing program data; and (h) remote data concentrator pin programming.

### Densitometer Processing Program (DPP)

The densitometer processing program may be responsible for collecting and sending the follow data to the signal processing program: (1) the densitometer density; (2) the densitometer signal conditioning circuitry, sensor and interface wiring built-in-test results; (3) the self test in progress indicator; (4) the software version/revision; (5) the calibration resistor reads in progress indicator; (6) the block checksum (includes error checking of resultant data for reasonableness).

### Boot Loader Program (BLP)

The boot loader program may be responsible for: (1) booting up the digital signal processor; (2) verifying the integrity of the stored boot loader program executable image in flash memory; (3) copying the signal processing program image from a Flash memory to a random access memory. The boot loader program may also be responsible for: (4) copying the signal processing program into random access memory to take advantage of its greater performance; (5) verifying the signal processing program executable copied in random access memory before the signal processing program is allowed to run.

### Remote Data Concentrator Provides Intrinsically Safe Design

Separation between intrinsically safe circuitry and unprotected circuitry may be, for example, compliant with UL 913 separation guidelines where the probability that the unprotected circuitry could receive full external threat voltage either through single component failures or cascaded failures to a level greater than extremely improbable (10⁻⁹), e.g., 10⁻¹¹, for the expected life of the airplane.

### Remote Data Concentrator Operating Condition Energy Level

For normal operating conditions without external threats to the fuel quantity processing unit, the wiring between the fuel quantity processing unit and remote data concentrator, the remote data concentrator, and any single in-tank fault, the remote data concentrator will limit the current and energy delivered to the in-tank components via protected side harnesses to less than 10 milliamps root mean square current and less than 20 microjoules of energy. External threats are defined as electromagnetic interference, high intensity radiated fields, and lightning.

### RDC Abnormal Operating Condition Energy Level

For abnormal operating conditions with any combination of external threats to the fuel quantity processing unit, the current and energy delivered to the fuel quantity indicating system equipment via the protected side harness may not exceed the following values: 30 milliamps root mean square current and 200 microjoules of energy.

As has been before mentioned, the plurality of remote data concentrators 204 communicate with the fuel quantity processor unit 202. To describe the features of the fuel quantity processor unit 202 in more detail, refer now to the following description.

### Fuel Quantity Processor Unit (FQPU) 202

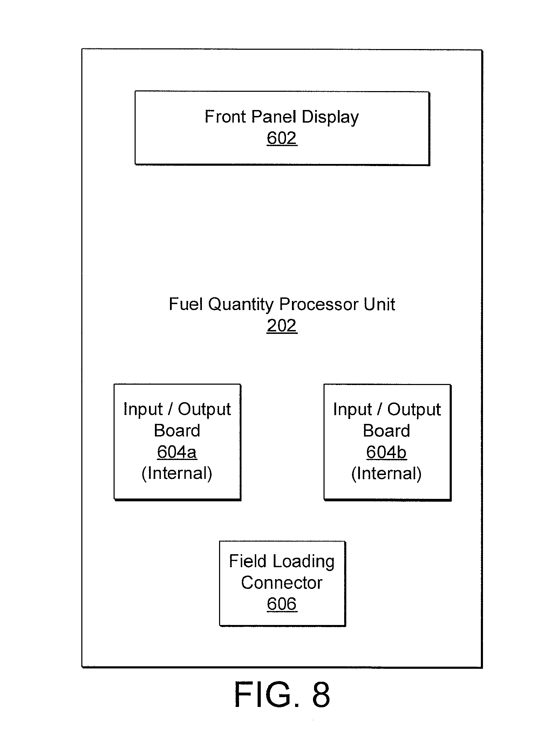

FIG. 8 is a block diagram of the fuel quantity processor unit 202. The fuel quantity processor unit has a field loadable software capability. The fuel quantity processor unit is connected to each of the remote data concentrators 204 and also may provide redundant supply voltage to the remote data concentrators 204.

The fuel quantity processor unit 202 is not connected directly to the in-tank compensators, densitometers, or capacitive probes. Each of the remote data concentrator interfaces may provide a barrier as described above. Thus, fuel quantity processor unit 202 internal and external electrical failures will not result in energy levels in the fuel tank above those accepted as intrinsically safe energy levels.

The fuel quantity processor unit 202 may be pin programmable and has an architecture that ensures that each fuel tank is gauged independently and therefore no single fault can cause the loss of display of more than one tank's fuel content.

The fuel quantity processor unit 202 may include two input/output channel boards 604a and 604b and a built in test equipment display 602. All fuel volume and mass calculations, volumetric shut-off determination and fuel quantity filtering, for all tanks, may be performed by both input/output channel boards 604a and 604b, independently.

Each input/output channel board 604a and 604b may provide its own, independent output for transmission of fuel quantity and built in test equipment status data to the engine indicating and crew alerting system, fuel quantity indicators and other airplane systems. Each input/output channel board 604a and 604b may also provide its own, independent, internal communication to the built in test equipment display.

### Fuel Quantity Processor Unit Software

The input/output channel boards 604a and 604b may host the input/output channel software and the BITE board may host the BITE software.

### Input/Output Channel Software

The input/output channel software may be field loadable through, for example, the connector 606 on the front of the fuel quantity processor unit 202. The input/output channel software may be responsible for:
1. Collecting and processing the tank unit data sent by the remote data concentrators and calculating the fuel quantity for display on the flight deck fuel quantity indicator module and the wing fuel panel.
2. Collecting fuel quantity load select data from the wing fuel panel.
3. Commanding the fuel shut off valves closed when the selected fuel quantity level is reached during fuel on-load.
4. Commanding the remote data concentrators to execute a self test and collecting the test results.
5. Monitoring and interpreting the fuel quantity processor unit programming pins.

### Built in test equipment / self test (BITE) Software

The built in test equipment software may be responsible for monitoring the fuel quantity indicating system health. The built in test equipment may report system failures to engine indicating and crew alerting system as a built in test equipment failure message. The specific fuel quantity indicating system fault may be stored in memory. The system faults may be viewed at the fuel quantity processor unit via front panel 602 display located on the front of the fuel quantity processor unit. The built in test equipment display board software may receive and transmit data across the digital data buses.

The received data may be from the two input/output channel boards 604a and 604b. Input/output channel board 604a data may be transmitted on a first bus. Input/output channel board 604b data is transmitted on a second bus. The transmitted data may go to the engine indicating and crew alerting system via a third bus. Input/output channel board 604a may also receive data from a third bus.

### Conclusion

A remote data concentrator for use in a vehicle is disclosed. The remote data concentrator comprises a circuitry for limiting the amount of energy delivered to a fuel tank of the vehicle to intrinsically safe levels when the remote data concentrator is coupled thereto.

Although the present embodiment has been described in accordance with the embodiments shown, one of ordinary skill in the art will readily recognize that there could be variations to the embodiments and those variations would be within the spirit and scope of the present embodiment. For example, implementations of a cabin services system described above can be implemented in any type of commercial vehicles including, e.g., helicopters, passenger ships, automobiles, and so on. Accordingly, many modifications may be made by one of ordinary skill in the art without departing from the spirit and scope of the appended claims.

## Claims

1. A remote data concentrator for use in a vehicle comprising:
circuitry for limiting the amount of energy delivered to a fuel tank of the vehicle to intrinsically safe levels when the remote data concentrator is coupled thereto.

2. The remote data concentrator of claim 1 wherein the remote data concentrator is hermetically sealed and the circuitry is coated with a protectant.

3. The remote data concentrator of claim 1 in which a plurality of protected side harnesses are coupled to the remote data concentrator and to a plurality of fuel tank sensors, wherein the protected harnesses conduct intrinsically safe signals to and from the remote data concentrator.

4. The remote data concentrator of claim 3 wherein the protected side harnesses comprise a shielded twisted pair.

5. The remote data concentrator of claim 3 wherein the outer harness jacket of the protected side harnesses are of a particular color to satisfy a visible means to identify critical features requirement.

6. The remote data concentrator of claim 3 wherein the protected side harnesses are installed with a predetermined separation from other wiring within the vehicle.

7. The remote data concentrator of claim 3 wherein the circuitry within the remote data concentrator comprises:
an intrinsically safe circuitry section coupled to the protected side harnesses; and
a non-intrinsically safe circuitry coupled to the fuel quantity processor.

8. The remote data concentrator of claim 1 wherein tank components of the vehicle are electrically isolated by the remote data concentrator.

9. The remote data concentrator of claim 7 wherein the intrinsically safe circuitry includes an isolation circuitry to limit the amount of energy entering a fuel tank.

10. The remote data concentrator of claim 1 wherein the circuitry includes:
a connector for receiving power;
an isolation element coupled to the connector to protect the tanks; and
a first interface circuit to an intrinsically safe circuit.

11. The remote data concentrator of claim 10 includes a power supply circuit coupled to the connector.

12. The remote data concentrator of claim 10 wherein the intrinsically safe circuitry comprises:
a tank interface;
a fuel interface circuit coupled to the tank interface and to the first interface circuit; and
a densitometer interface circuit coupled to the tank interface and the first interface circuit.

13. The remote data concentrator of claim 1 wherein the fuel tank is isolated from aircraft wiring via a combination of the isolation circuitry and the protected side harnesses.

14. An airplane comprising:
a fuel tank; and
a remote data concentrator coupled to the fuel tank, the remote data concentrator comprising circuitry for limiting the amount of energy delivered to the fuel tank to intrinsically safe levels when the remote data concentrator is coupled thereto.

15. The airplane of claim 14 wherein the remote data concentrator is hermetically sealed and the circuitry is coated with a protectant.

16. The airplane of claim 14 in which a plurality of protected side harnesses are coupled to the remote data concentrator and to a plurality of fuel tank sensors, wherein the protected harnesses conduct intrinsically safe signals to and from the remote data concentrator.

17. The airplane of claim 16 wherein the protected side harnesses comprise a shielded twisted pair.

18. The airplane of claim 16 wherein the outer harness jacket of the protected side harnesses are of a particular color to satisfy a visible means to identify critical features requirement.

19. The airplane of claim 16 wherein the protected side harnesses are installed with a predetermined separation from other wiring within the vehicle.

20. The airplane of claim 14 wherein the circuitry within the remote data concentrator comprises:
an intrinsically safe circuitry section coupled to the protected side harnesses; and
a non-intrinsically safe circuitry coupled to the fuel quantity processor.

21. The airplane of claim 14 wherein tank components of the vehicle are electrically isolated by the remote data concentrator.

22. The airplane of claim 20 wherein the intrinsically safe circuitry includes an isolation circuitry to limit the amount of energy entering a fuel tank.

23. The airplane of claim 14 wherein the circuitry includes:
a connector for receiving power;
an isolation element coupled to the connector to protect the tanks; and
a first interface circuit to an intrinsically safe circuit.

24. The airplane of claim 23 includes a power supply circuit coupled to the connector.

25. The airplane of claim 20 wherein the intrinsically safe circuitry comprises:
a tank interface;
a fuel interface circuit coupled to the tank interface and to the first interface circuit; and
a densitometer interface circuit coupled to the tank interface and the first interface circuit.

26. The airplane of claim 14 wherein the fuel tank is isolated from aircraft wiring via a combination of the isolation circuitry and the protected side harnesses.
